Europäisches Patentamt

European Patent Office

Office européen des brevets

(11) Veröffentlichungsnummer: **0 470 477 A1**

## EUROPÄISCHE PATENTANMELDUNG

(21) Anmeldenummer: **91112720.7**

(51) Int. Cl.5: **F16C 33/40**

(22) Anmeldetag: **29.07.91**

(30) Priorität: **07.08.90 DE 4025011**

(43) Veröffentlichungstag der Anmeldung:
**12.02.92 Patentblatt 92/07**

(84) Benannte Vertragsstaaten:
**DE ES FR GB IT**

(71) Anmelder: **Jacob, Werner**
**Briandring 29**
**W-6000 Frankfurt/Main 70(DE)**

Anmelder: **Basener, Helmut**
**Nägeleshofstrasse, 24**

**W-7080 Aalen-Hofherrnweiler(DE)**

(72) Erfinder: **Jacob, Werner**
**Briandring 29**
**W-6000 Frankfurt/Main 70(DE)**
Erfinder: **Basener, Helmut**
**Nägeleshofstrasse, 24**
**W-7080 Aalen-Hofherrnweiler(DE)**

(74) Vertreter: **Harwardt, Günther, Dipl.-Ing. et al**
**HARWARDT NEUMANN PATENTANWÄLTE**
**Scheerengasse 2 Postfach 1455**
**W-5200 Siegburg 2(DE)**

(54) **Kugelführung.**

(57) Die Erfindung betrifft eine Kugelführung 1, deren Käfig 6 aus einem Band 8 durch Wendeln hergestellt ist. Das Band 8 ist vorgefertigt und weist die Durchbrüche 9 für die Kugeln 7 zur Führung von Außenteil 2 und Welle 4 einandergegenüber auf. Die Seitenkanten 15, 16 sind diskontinuierlich durch Schweißstellen 14 miteinander verbunden. Der Käfig 6 kann zusätzlich mit einem Stützring 17 versehen sein, der sich an der Stirnfläche 18 des Käfigs 6 abstützt und dessen Abstützfläche 21 als Anlagefläche für eine Druckfeder 19 dient, deren anderes Ende sich an der Stützfläche 20 eines Anschlages 22 zur Rückstellung des Käfigs 6 in eine Mittelstellung bzw. Ausgangsstellung abstützt. Durch die Verwendung eines Bandes 8 können Käfige 6 unterschiedlicher Durchmesser und Längen in einfacher Weise hergestellt werden.

Fig. 2

Die Erfindung betrifft eine Kugelführung mit einem eine zylindrische Bohrung aufweisenden Außenteil, einer darin axial und/oder drehend relativ bewegbaren Welle, mit zwischen beiden abwälzend angeordneten Kugeln, welche in radialen Durchbrüchen eines hohlzylindrischen Käfigs radial nach innen und außen vorstehend gehalten sind, wobei in Achsrichtung und Umfangsrichtung des Käfigs eine Mehrzahl von Kugeln vorhanden ist und der Käfig aus einem Kunststoffband besteht, das die Durchbrüche für die Kugeln aufweist und zu einer Wendel gewunden ist.

Eine derartige Ausbildung ist aus der US-PS 2 566 421 bekannt. Dabei werden in Stangenmaterial Bohrungen für die Aufnahme der Kugeln eingebracht. Ferner erfolgt jeweils durch Einschnitte quer zur Stabachse zwischen jeweils zwei Öffnungen für die Aufnahme der Kugeln eine Querschnittsreduzierung, um die dadurch gebildeteten Abschnitte gegeneinander abbiegen zu können. In der vorgenannten Druckschrift wurde als Alternative dazu vorgeschlagen, jeden eine Kugel aufnehmenden Abschnitt als separaten Teil darzustellen und die Einzelteile durch Schweißen miteinander zu verbinden. Von Nachteil ist, daß bei einem aus mehreren Windungen aufgebauten Lager keine feste Einheit gebildet ist. Dies ist vielleicht dann, wenn die Elemente aus Stahl oder sonstigem Metall bestehen, akzeptabel, weil aufgrund einer plastischen Verformung der Verbindungsbereiche und des Materials noch ein geringer Zusammenhalt erzielbar ist. Dies trifft jedoch dann nicht zu, wenn Kunststoff als Material gewählt wird.

Ferner ist aus der CH-PS 459 672 bekannt, den Käfig aus Ringen zusammenzusetzen, die miteinander verschweißt, verklebt oder forschlüssig verbunden sind.

Solche Kunststoffkäfige werden entweder in Einzelfertigung oder bei großen Losgrößen als Spritzgießteil hergestellt. Dabei sind die Werkzeuge aufwendig, weil für jede einzelne der vielen Kugeln je Ring ein entsprechender Durchbruch vorgesehen sein muß. Darüberhinaus müssen die Durchbrüche so gestaltet sein, daß die Kugeln gegen Herausfallen nach innen und außen gesichert sind. Ferner ist es erforderlich, für jeden Durchmesser gesonderte Ringe herzustellen, die den Käfig bildet.

Insgesamt sind die vorgenannten Ausführungsformen von der Herstellung her aufwendig. Für jeden Durchmesser sind geeignete Käfige bevorratet zu halten bzw. herzustellen.

Der Erfindung liegt die Aufgabe zugrunde, eine Kugelführung vorzuschlagen, die einen Käfig aufweist, der in einfacher Weise an verschiedene Führungsdurchmesser und Führungslängen anpaßbar und damit kostengünstig herstellbar ist und der die für eine gute Führung erforderliche Steifigkeit aufweist.

Diese Aufgabe wird erfindungsgemäß dadurch gelöst, daß die aneinanderanliegenden Kanten des zur Wendel gewundenen Bandes miteinander verbunden sind.

Von Vorteil bei dieser Ausbildung ist, daß aus einem einzigen Band durch Herstellung einer Wendel, also durch schraubenlinienförmiges winden, Käfige unterschiedlichen Führungsdurchmessers und unterschiedlicher Führungslänge herstellbar sind. Aufgrund der Wendelung ergibt sich darüberhinaus automatisch ein Versatz der Kugeln in Längs- und Querrichtung, so daß eine hohe Tragzahl erreicht wird, weil die einzelnen Kugeln jeweils auf unterschiedlichen Berührungslinien an der Welle bzw. in der Bohrung des Außenteils abwälzen. Hieraus resultiert eine gute Lastverteilung und eine entsprechend hohe Tragzahl.

Die Lebensdauer erhöht sich entscheidend durch eine Verteilung des Kontaktes beim Linearbetrieb auf eine Vielzahl von Kontaktlaufbahnen. Durch die Verbindung erhält der Käfig die erforderliche Steifigkeit um die Führungskräfte aufnehmen zu können.

In weiterer Ausgestaltung der Erfindung ist vorgesehen, daß das Band eine Reihe von hintereinander angeordneten Durchbrüchen für die Kugeln aufweist. Hieraus resultiert eine hohe Anpaßbarkeit des Bandes. Für große Durchmesser ist es jedoch auch denkbar, daß das Band zwei oder mehr Reihen von Kugeln nebeneinander aufweist, welche dann zu einer Wendel verformt und miteinander verbunden werden. Dabei könnten die Taschen für die Aufnahme der Kugeln zum Beispiel um die halbe Teilung zueinander versetzt werden. Solche Bänder sind bevorzugt für Führungen großen Durchmessers einzusetzen.

Bevorzugt sind die Kanten des Bandes diskontinuierlich im Bereich der Wendel über ihre Länge miteinander verbunden. Dabei kommt bevorzugt eine stoffschlüssige Verbindung und insbesondere eine Verschweißung in Betracht. Es ist jedoch auch denkbar, daß die Kanten formschlüssig miteinander verbunden werden. Die formschlüssige Verbindung kann durch in den Bandkanten verlaufenden Nuten und Vorsprünge bzw. durch parallel zu den Bandkanten verlaufende Stege, die zu den Bandkanten Ausnehmungen bilden und in die der Steg des Bandes bei der nächsten Wendelung eingreift, gebildet sein. Dieser Formschluß läßt für das Wendeln eine Verschiebung der Bandkanten einandergegenüber zur Durchmesseranpassung zu.

Zur Halterung der Kugeln sind seitlich der Durchbrüche des Bandes von mindestens einer der beiden Oberflächen des Bandes abstehende Nasen vorgesehen. Dies bringt den Vorteil mit sich, daß die Kugeln eingefedert werden können. Ein nachträgliches Verformen der Durchbruchskanten, wie es beispielsweise bei Messingbuchsen üblich ist, entfällt hierbei. Dadurch ist auch ein weiterer Vorteil gegeben. Die Gefahr, daß die Kugeln erst freilaufen müssen, wie bei Käfigen, deren Durchbrüche verformt werden, besteht nicht. Dies wirkt sich umso positiver aus, je kleinere Kugeln verwendet werden, da bei kleinen Kugeln die Gefahr einer Klemmung größer ist als bei relativ großen Kugeln. Das Band kann dabei so gestaltet sein, daß ausgehend von der neutralen Zone auf der die Kugelmittelpunkte gehalten sind, dessen Stärke so bemessen ist, daß die gewünschte Umschließung der Kugeln durch das Band erfolgt. Dadurch weist die eine Bandfläche nur Bohrungen auf, aus welchen die Kugeln geringfügig herausragen, während von der anderen Fläche vorstehend die Nasen angeordnet sind. Es können auch beidflächig Nasen vorgesehen sein. Bevorzugt ist die glatte, daß heißt, die nicht mit Nasen versehene Fläche, die der Bohrung des Außenteils zugewandte Außenfläche des Käfigs.

Zur Verbesserung der Flexibilität des Bandes sind zwischen zwei aufeinander folgenden Durchbrüchen zur Aufnahme der Kugeln in weiterer Ausgestaltung sich über die Breite des Bandes erstreckende Nuten vorgesehen. Diese sind bevorzugt in beiden Oberflächen des Bandes vorhanden.

Eine besonders günstige Bauform ergibt sich, wenn für das Band als Kunststoff Polyamid gewählt wird.

Das Kunststoffband kann in einfacher Weise durch abschnittsweises Spritzen in einem Formwerkzeug endlos hergestellt werden. Der Werkstoff Polyamid ergibt einen homogenen Übergang an den Anspritzpunkten. Hieraus ergeben sich einfache Werkzeuge. Die Kosten für die Herstellung eines Käfigs reduzieren sich dadurch erheblich gegenüber solchen Käfigen, die in einem Werkzeug als Buchsenabschnitt oder als Büchse in der fertigen Länge mit sämtlichen Durchbrüchen durch Spritzgießen hergestellt sind.

Ferner kann in Ergänzung der Lehre nach der Erfindung vorgesehen sein, daß seitlich an den Stirnflächen des Käfigs sich jeweils ein Stützring anschließt, der als Abstützbasis für eine Druckfeder dient, die mit ihrem anderen Ende gegenüber der Abstützfläche eines Anschlages des Außenteils oder der Welle abgestützt ist.

Bevorzugte Ausführungsbeispiele sind in der Zeichnung schematisch dargestellt.

Es zeigt

Fig. 1     eine Kugelführung mit einem erfindungsgemäßen Käfig in der Seitenansicht als Halbschnitt,

Fig.2     eine Seitenansicht nur eines Käfigs mit einer Welle mit seitlicher Federabstützung des Käfigs,

Fig. 3     einen Abschnitt eines Käfigbandes einer ersten Ausführungsform mit einer montierten Kugel in drei Ansichten,

Fig. 4     zwei Ansichten eines Anschnitts eines Käfigbandes einer ersten Variante für eine formschlüssige Verbindung,

Fig. 5     einen Abschnitt eines Käfigbandes mit nur von einer Fläche vorstehenden Nasen zur Halterung der Kugeln in drei Ansichten und

Fig. 6     einen Querschnitt durch ein Käfigband mit einer alternativen formschlüssigen Verbindung der Bandkanten.

Die Kugelführung 1 besteht aus dem Außenteil 2, welches als Hülse ausgebildet ist und eine zylindrische Bohrung 3 besitzt. In der Bohrung 3 des Außenteiles 2 ist eine Welle 4 axial bewegbar und drehbar geführt; Außenteil 2 und Welle 4 können also einander gegenüber Relativbewegungen ausführen. Zwischen Außenteil 2 und Welle 4 sind Wälzkörper in Form von Kugeln 7 angeordnet, die in einem Käfig 6 gehalten sind. Der Käfig 6 ist konzentrisch zur Außenfläche 5 der Welle 4 und der Bohrung 3 des Außenteiles 2 im Zwischenraum zwischen beiden angeordnet. Die Kugeln 7 ragen radial aus Durchbrüchen 9 des Käfigs nach innen und außen hervor und rollen an der Bohrungswandung der Bohrung 3 des Außenteiles 2 und auf der Außenfläche 5 der Welle 4 ab. Der Käfig 6 verschiebt sich im Verhältnis zu dem Außenteil 2 bzw. der Welle 4 um den halben Relativweg zwischen den beiden zueinander, entweder in Längsrichtung oder in Drehrichtung.

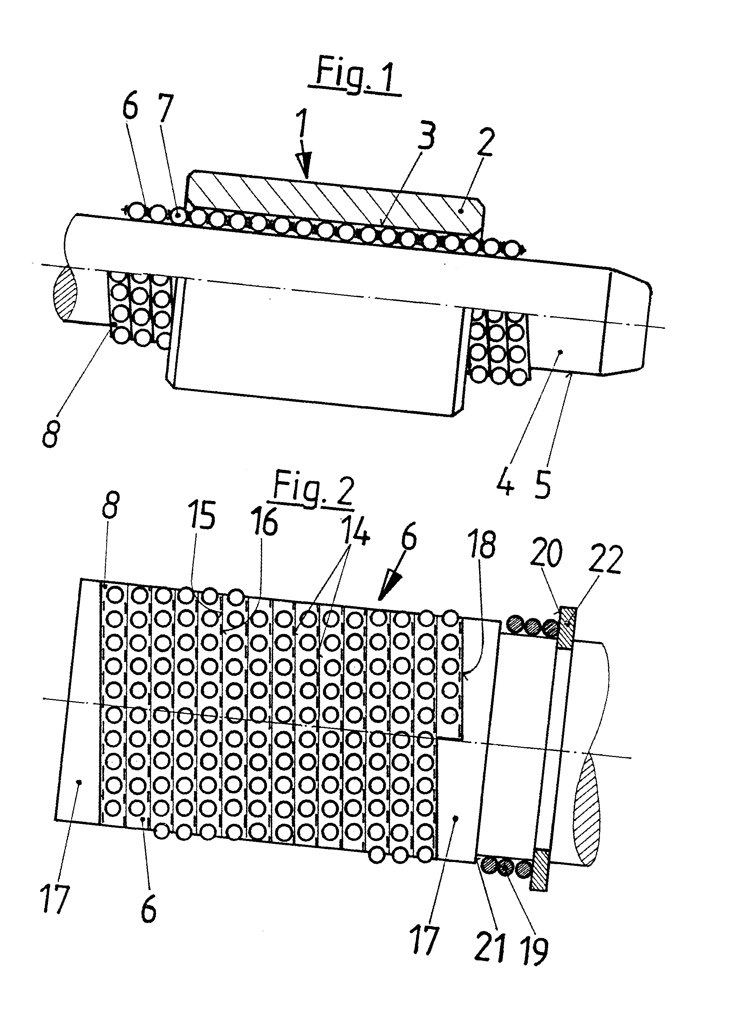

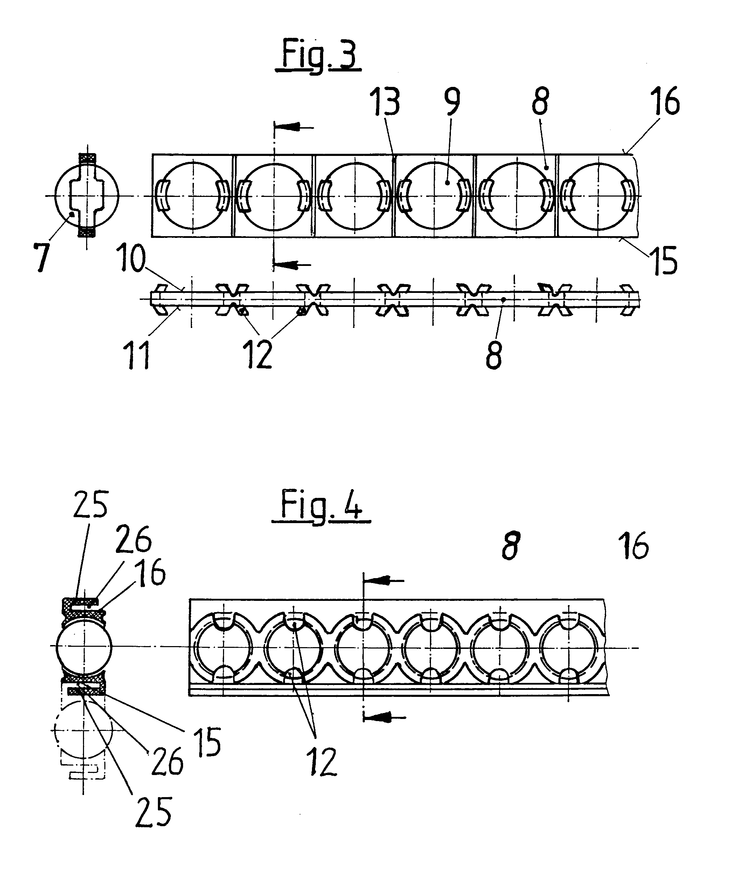

Aus Figur 1 und Figur 2 ist erkennbar, daß der Käfig 6 aus einem Band 8 hergestellt ist, das im Einzelnen aus den Figuren 3 und 4 ersichtlich ist. Das Band 8 ist endlos durch Spritzgießen hergestellt und umfaßt im Abstand hintereinander angeordnet die Durchbrüche 9 für die Aufnahme der Kugeln 7. Aus den beiden Oberflächen 10, 11 ragen seitlich der Durchbrüche 9 Nasen 12 hervor, welche die Kugeln 7 teilweise umfassen und sie gegen Herausfallen sichern. Das Band 8 ist zu einer Wendel schraubenlinienförmig gewunden. Die Längskanten 15,16 des Bandes 8 sind diskontinuierlich durch Schweißstellen 14 stoffschlüssig miteinander verbunden und bilden so einen geschlossen Käfig 6. Um das Biegen bzw. Wendeln des Bandes 8 zu erleichtern, sind zwischen zwei aufeinanderfolgenden Durchbrüchen 9 in den Oberflächen 10,11 des Bandes sich über dessen Breite erstreckende Nuten 13 vorgesehen, die den Querschnitt des Bandes 8 schwächen und ein Anpassen erleichtern. Für den Fall, daß eine Kugelführung vorgesehen ist, bei der der Käfig 6 in eine Mittelstellung zurückgeführt werden soll, sind an den Enden der seitlichen Stirnflächen 18 des Käfigs 6 anschließend Stützringe 17 angebracht. Diese können ebenfalls durch Schweißstellen mit den Längskanten 15 des Bandes 6 verbunden sein. Die Enden der Stützringe 17 bilden Abstützflächen 21 für eine Druckfeder 19, die mit ihrem anderen Ende an der Abstützfläche 20 eines Anschlages 22, welcher entweder, wie dargestellt, der Welle 4 oder dem Außenteil 2 zugeordnet ist, abgestützt ist.

Das Band 8 besteht vorzugsweise aus folgenden Kunststoffen Polyamid. Dieser Kunststoff läßt sich besonders günstig im Spritzgießverfahren zu einem endlosen Band 8 formen. Darüberhinaus weist er die nötige Steifigkeit auf, die für den Käfig 6 gefordert ist, nachdem die Längskanten 15,16 des Bandes 8 durch die Schweißstellen 14 miteinander verbunden sind.

Bei der Ausführungsform eines Käfigbandes 8 entsprechend Figur 4 ist, wie insbesondere aus der Querschnittsdarstellung ersichtlich, parallel zu den Bandkanten 15 bzw. 16 jeweils mit Abstand ein Steg 25 verlaufend angeordnet. Die Stege 25 bilden zusammen mit den Bandkanten 15, 16 Nuten 26, in welche jeweils beim Aufwickeln, wie aus der Schnittdarstellung in Figur 4 erkenntlich, der Steg 25 der nächsten Wendel des Bandes 8 in Eingriff bringbar ist. Hierzu öffnen sich die Nuten 26 zu entgegengesetzten Oberflächen des Bandes 8.

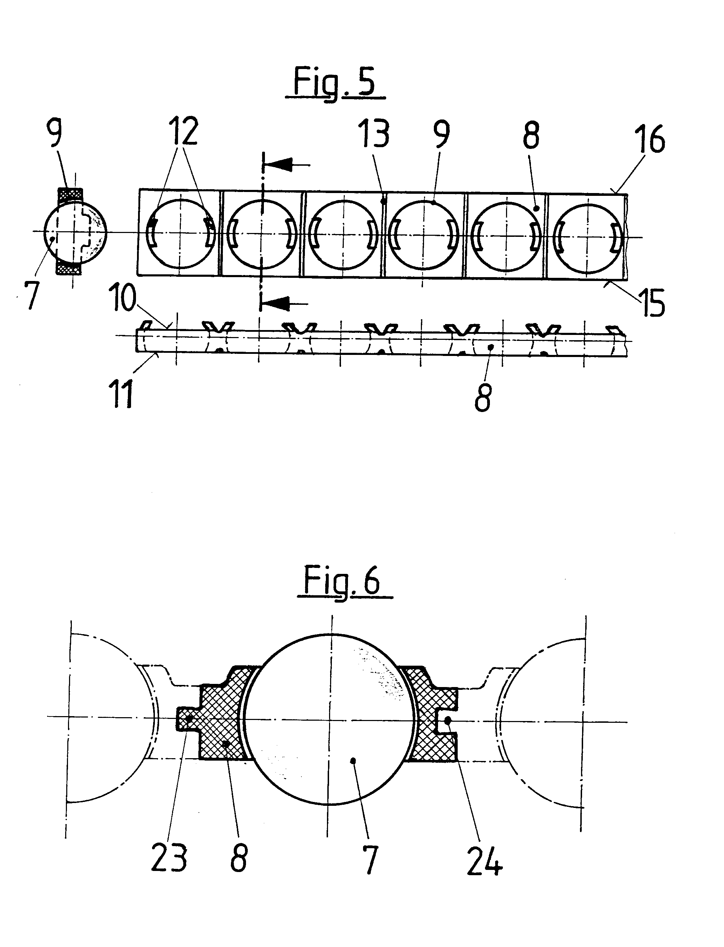

Eine alternative Ausführungsform der Zentrierung aneinanderanliegender Kanten 15, 16 des Käfigbandes 8 sind aus Figur 6 ersichtlich. Danach ist die eine Bandkante mit einem Zentrieransatz 23, der entlang der Bandkante verläuft, versehen, während die andere Bandkante mit einer entsprechenden Vertiefung versehen ist. Die Verbindung zwischen Zentrieransatz 23 und Nut 24 bzw. Steg 25 und Nut 26 kann zusätzlich durch Klebung, Verschweißung oder dergleichen gesichert werden.

In Figur 5 ist eine alternative Ausführung des Bandes 8 dargestellt, wobei nur von der Oberfläche 10 vorstehend Nasen 12 vorhanden sind. Die Einkammerung der Kugel 7 erfolgt einerseits durch die Nasen 12 und andererseits durch den Formschluß der Ausnehmung 9 im Band 8, wobei das Band 8 ausgehend von der neutralen Faser zur Oberfläche 11 hin dicker ausgebildet ist, als zur Oberfläche 10, welche die Nasen 12 aufweist. Die Oberfläche 11 ist bevorzugt nach dem Wickeln des Käfigs 6 nach außen hin gerichtet. Sie bildet einen glatten Abschluß.

Bezugszeichenliste

| | |
|---|---|
| 1 | Kugelführung |
| 2 | Außenteil/Hülse |
| 3 | Bohrung im Außenteil |
| 4 | Welle |
| 5 | Außenfläche der Welle |
| 6 | Käfig |
| 7 | Kugeln |
| 8 | Band |
| 9 | Durchbruch |
| 10,11 | Oberfläche |
| 12 | Nasen |
| 13 | Nuten |
| 14 | Schweißstellen |
| 15,16 | Bandkanten |
| 17 | Stützring |
| 18 | Stirnfläche des Käfigs |
| 19 | Druckfeder |
| 20 | Abstützfläche des Anschlags |
| 21 | Abstützfläche am Stützring |
| 22 | Anschlag |
| 23 | Zentrieransatz |
| 24 | Nut |
| 25 | Steg |
| 26 | Nut |

**Patentansprüche**

1. Kugelführung mit einem eine zylindrische Bohrung aufweisenden Außenteil, einer darin axial und/oder drehend relativ bewegbaren Welle, mit zwischen beiden abwälzend angeordneten Kugeln, welche in radialen Durchbrüchen eines hohlzylindrischen Käfigs radial nach innen und außen vorstehend gehalten sind, wobei in Achsrichtung und Umfangsrichtung des Käfigs eine Mehrzahl von Kugeln vorhanden ist und der Käfig aus einem Kunststoffband besteht, das die Durchbrüche für die Kugeln aufweist und zu einer Wendel gewunden ist,

   dadurch gekennzeichnet,

   daß die aneinanderanliegenden Kanten (15,16) des zur Wendel gewundenen Bandes (8) miteinander verbunden sind.

2. Kugelführung nach Anspruch 1,

   dadurch gekennzeichnet,

   daß das Band (8) eine Reihe von hintereinander angeordneten Durchbrüchen (9) für die Kugeln (7) aufweist.

3. Kugelführung nach einem der Ansprüche 1 oder 2,

   dadurch gekennzeichnet,

   daß die Kanten (15,16) diskontinuierlich über ihre Länge miteinander verbunden sind.

4. Kugelführung nach Anspruch 1 oder 3,

   dadurch gekennzeichnet,

   daß die Kanten (15,16) stoffschlüssig miteinander verbunden sind.

**5.** Kugelführung nach Anspruch 4,

dadurch gekennzeichnet,

daß die Kanten (15,16) verschweißt sind.

**6.** Kugelführung nach einem der Ansprüche 1 oder 3,

dadurch gekennzeichnet,

daß die Kanten (15,16) formschlüssig miteinander verbunden sind.

**7.** Kugelführung nach Anspruch 1,

dadurch gekennzeichnet,

daß das Band (8) seitlich der Durchbrüche (9) von mindestens einer der beiden Oberflächen (10,11) abstehende Nasen (12) zur Halterung der Kugeln (7) aufweist.

**8.** Kugelführung nach Anspruch 1,

dadurch gekennzeichnet,

daß das Band (8) zwischen zwei aufeinanderfolgenden Durchbrüchen (9) mit sich über seine Breite erstreckenden Nuten (13) versehen ist.

**9.** Kugelführung nach Anspruch 1,

dadurch gekennzeichnet,

daß das Band (8) aus Polyamid besteht.

**10.** Kugelführung nach Anspruch 1,

dadurch gekennzeichnet,

daß das Band (8) durch abschnittweises Spritzen in einem Formwerkzeug endlos hergestellt ist.

**11.** Kugelführung nach Anspruch 1,

dadurch gekennzeichnet,

daß seitlich an den Stirnflächen (18) des Käfigs (6) sich jeweils ein Stützring (17) anschließt, der als Abstützbasis für eine Druckfeder (19) dient, die mit ihrem anderen Ende gegenüber einer Abstützfläche (20) eines Anschlags (22) des Außenteils (2) oder der Welle

(4) abgestützt ist.

## Fig. 1

## Fig. 2

## Fig.3

## Fig.4

## Fig. 5

## Fig. 6

**Europäisches Patentamt**

**EUROPÄISCHER RECHERCHENBERICHT**

Nummer der Anmeldung

**EP 91 11 2720**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 425 015 (FISCHER-BRODBECK) <br> * Seiten 6,8,10,11,13,14; Figur 8 * <br> — — — | 1-6,9,10 | F 16 C 33/40 |
| D,Y | US-A-2 566 421 (LAPOINTE) <br> * Spalte 2, Zeilen 11-35; Spalte 3, Zeile 34; Spalte 4, Zeilen 32-42; Figuren 1,6,7,8 * <br> — — — | 1,2,3,6 | |
| D,Y | CH-A-459 672 (NORMA) <br> * Das ganze Dokument * <br> — — — | 1,2,3,6 | |
| A | FR-A-1 372 144 (FISCHER-BRODBECK) <br> * Das ganze Dokument * <br> — — — | 1,3,4,5,6, 9 | |
| A | DE-A-3 635 261 (HORST KABUS) <br> * Fig. * <br> — — — | 7,8 | |
| A | DE-C-955 010 (BERGER) <br> — — — — — | | |

|  |
|---|
| **RECHERCHIERTE SACHGEBIETE (Int. Cl.5)** |
| F 16 C |

Der vorliegende Recherchenbericht wurde für alle Patentansprüche erstellt

| Recherchenort | Abschlußdatum der Recherche | Prüfer |
|---|---|---|
| Den Haag | 04 Oktober 91 | ORTHLIEB CH.E. |